# EUROPÄISCHE PATENTSCHRIFT

(11) **EP 0 990 226 B1**
(45) Veröffentlichungstag und Bekanntmachung des Hinweises auf die Patenterteilung: **15.10.2003**
(21) Anmeldenummer: 98919270.3
(22) Anmeldetag: 15.04.1998
(51) Int. Cl.: G07F 7/08

(54) **SYSTEM ZUM GESICHERTEN LESEN UND BEARBEITEN VON DATEN AUF INTELLIGENTEN DATENTRÄGERN**
SYSTEM FOR SECURED READING AND PROCESSING OF DATA ON INTELLIGENT DATA CARRIERS
SYSTEME PERMETTANT UNE LECTURE ET UN TRAITEMENT PROTEGES DE DONNEES SUR DES SUPPORTS DE DONNEES INTELLIGENTS

(30) Priorität: 02.05.1997 DE 19718547
(43) Veröffentlichungstag der Anmeldung: 05.04.2000
(73) Patentinhaber: Deutsche Telekom AG, 53113 Bonn (DE)
(72) Erfinder: SCHAEFER-LORINSER, Frank, D-64372 Ober-Ramstadt (DE)
(74) Vertreter: Gornott, Dietmar, Dipl.-Ing.
(86) Internationale Anmeldenummer: EP9802205
(87) Internationale Veröffentlichungsnummer: WO98050894

(56) Entgegenhaltungen:
- EP-A- 0 231 702
- EP-A- 0 588 339
- WO-A-91/16691
- WO-A-95/22125
- DE-A- 4 119 924
- GB-A- 2 154 344

## Beschreibung

Die Erfindung betrifft ein System zum gesicherten Lesen und Ändern von Daten auf intelligenten Datenträgern gemäß dem Oberbegriff des Patentanspruchs 1 sowie in diesem System ausführbare Verfahren.

Ein System gemäß dem Oberbegriff des Patentanspruch 1 läßt sich z.B. dem Fachbuch "Kryptologie" von A. Beutelspacher, 5. Auflage, Kapitel 4, erschienen 1997 im Vieweg --Verlag, Braunschweig/Wiesbaden, entnehmen und wird als bekannt vorausgesetzt. Insbesondere eignet sich das dort im Zusammenhang mit Bild 4.12 auf S. 93 und Bild 4.16 auf S. 101 beschriebene, auf symmetrischer Verschlüsselung beruhende Challenge-and-Response-Verfahren zur Authentikation von intelligenten Datenträgern gegenüber Rechnern oder ihren Eingabeterminals.

Es wurden auch schon Systeme bekannt, die asymmetrische Schlüsselverfahren oder mehrere symmetrische oder asymmetrische Schlüsselverfahren nacheinander einsetzen (siehe z.B. "Funkschau" 1996, Heft 25, S. 60 - 63). Asymmetrische Schlüsselverfahren, z.B. der in dem eingangs genannten Fachbuch auf S. 122 f beschriebene RSA - Algorithmus, haben gegenüber symmetrischen Verfahren aber den Nachteil, daß sie aufgrund von mit sehr großen Zahlen auszuführenden Rechenoperationen relativ langsam sind und, bei Verwendung zur Authentikation der einzelnen Datenträger, die Speicherung vieler Schlüssel in jedem Terminal oder - bei bestehender Datenverbindung zu einem zentralen Speicher **-** in diesem Speicher voraussetzen.

Die in solchen Systemen verwendeten intelligenten Datenträger, z.B. mit Prozessoren und Speichern ausgestattete IC-Karten - heute meist als Chipkarten bezeichnet -, die oft höchst sensitive Daten wie z.B. Zugangsberechtigungen zu gesicherten Bereichen oder die Erlaubnis zur Abbuchung von Geldbeträgen von einem Konto enthalten, sind infolge der Benutzung der o.g. kryptographischen Verfahren gegen unerlaubte Benutzung, unbefugtes Auslesen wie auch gegen absichtliche Verfälschung der gespeicherten Daten weitgehend gesichert. Dies gilt auch für die heute zunehmend verwendeten, wiederaufladbaren sogenannten elektronischen Geldbörsen (z.B. Pay Card, Geldkarte), von denen zur Bezahlung von Waren oder Dienstleistungen Geldbeträge abgebucht werden können, zumindest dann, wenn die Terminals, an denen die Abbuchungen vorgenommen werden, eine Verbindung zu einer Zentrale aufweisen, über die ein dort gespeicherter, zur Authentikation eines Datenträgers benötigter Schlüssel abgerufen werden kann oder ein von einem Datenträger zur Authentikation übermitteltes Kryptogramm zur Überprüfung an die Zentrale weitergeleitet werden kann.

Letzteres ist jedoch nicht immer der Fall, da Datenverbindungen für öffentliche Kartentelefone, für Fahrkarten-, Parkschein- oder Warenautomaten zu aufwendig sind. Hier wird ein für sicherheitskritische Operationen benötigter Schlüssel meist im Terminal, innerhalb eines sogenannten Sicherheitsmoduls vorgehalten. Dieser Schlüssel ist in aller Regel ein übergeordneter Schlüssel (Master-Key), aus dem der für den jeweils zu bearbeitenden Datenträger benötigte, zu dessen individuellem Schlüssel passende Schlüssel unter Verwendung einer vom Datenträger übermittelten datenträger-individuellen Information, z.B. der Chipkartennummer, berechnet wird.

Die Tatsache, daß sich dieser übergeordnete Schlüssel in einem Terminal in ungesicherter Umgebung befindet, beeinträchtigt die Sicherheit des gesamten Systems, da sein Ausspähen einen Angreifer in die Lage versetzen würde, zu allen im System verwendeten Datenträgern unberechtigte Duplikate herstellen zu können.

Eine solche Gefahr auszuschließen oder zumindest zu verringern und damit die Sicherheit des Systems zu erhöhen, ist die Aufgabe der vorliegenden Erfindung.

Durch EP 0 588 339 A2 ist ein Verfahren und ein Gerät zur Kontenabrechnung mit Hilfe von IC-Karten bekanntgeworden. Hierbei ist ebenfalls ein Betrieb ohne Verbindung des Terminals mit einer Verwaltungszentrale möglich. Die dabei erforderliche Kommunikation zwischen der IC-Karte und dem Terminal bedeutet einen erheblichen Aufwand, insbesondere Rechenaufwand, der bei der beschränkten Kapazität des Prozessors in der IC-Karte nachteilig ist.

Die erfindungsgemäße Aufgabe soll derart gelöst werden, daß nur ein geringer Rechen- bzw. Kommunikationsaufwand zwischen intelligentem Datenträger und Terminal erforderlich ist. Ein System, das diese Aufgabe löst, wird durch die Merkmale des Patentanspruchs 1 beschrieben.

Arbeitsverfahren für dieses System sind, für den Fall des Lesens von Daten im Patentanspruch 5, für den Fall des Lesens und Änderns der auf dem Datenträger gespeicherten Daten im Patentanspruch 6 angegeben.

Durch Speicherung eines zweiten, einem asymmetrischen Schlüsselalgorithmus genügenden Schlüsselpaares auf dem Datenträger wird die Möglichkeit geschaffen, am Ende eines Datenauslese- oder -bearbeitungsvorgangs den Vorgang mittels einer sogenannten elektronischen Unterschrift zu bestätigen. Deren Berechnung und Prüfung setzt das auf dem Datenträger gespeicherte Schlüsselpaar voraus und ist nicht allein mittels eines aus dem übergeordneten Schlüssel eines Terminals abgeleiteten Schlüssels und dessen Nachbildung auf dem Datenträger zu erreichen.

Vorteilhafte Weiterbildungen des Systems nach der Erfindung sind in den Unteransprüchen angegeben:

Die Erfindung ermöglicht die Überprüfung der Zugehörigkeit der einzelnen Datenträger zum System mittels eines asymmetrischen Schlüsselverfahrens, ohne jedoch die Nachteile eines asymmetrischen Schlüsselverfahrens, wie sie etwa die Hinterlegung geheimer Schlüssel für alle Datenträger an zentraler Stelle mit sich bringen würde, in Kauf zu nehmen. Auch die Richtigkeit des auf dem Datenträger gespeicherten, zur Erstellung der elektronischen Unterschrift benutzten Schlüsselpaares wird hier vom System mitzertifiziert. Dabei verbleibt der zur Erstellung des Zertifikats verwendete, geheime Schlüssel in der Zentrale und ist somit gegen fremden Zugriff sicher.

Patentanspruch 2 enthält eine Ausgestaltung, die zur Authentikation der Datenträger gegenüber einem Terminal die Benutzung eines nach einem symmetrischen Schlüsselalgorithmus arbeitenden Schlüsselverfahrens gestattet. Die Ableitung der zur Authentikation der einzelnen Datenträger verwendeten Schlüssel aus einem übergeordneten Schlüssel erspart die Online-Anbindung aller Terminals an die Zentrale bzw. die Speicherung umfangreicher Schlüssellisten in den Terminals.

Die Patentansprüche 3 und 4 betreffen die Bereitstellung eines weiteren in einem symmetrischen Schlüsselverfahren verwendbaren Schlüssels.

Die den Verfahrensansprüchen zugeordneten Unteransprüche 7 und 8 betreffen Maßnahmen zur besseren Kontrolle von Buchungsvorgängen bei als elektronische Geldbörsen eingesetzten Datenträgern.

Anhand von zwei Figuren sollen nun Ausführungsbeispiele für das System nach der Erfindung und in diesem System durchgeführte Verfahren zum Auslesen und Ändern der auf Datenträgern gespeicherten Daten beschrieben werden.

Es zeigen:
- Fig. 1: schematisch die wesentliche Hardware eines Systems nach der Erfindung,
- Fig. 2: ein Ablaufdiagramm für die gesicherte Änderung der auf einem Datenträger eines nach Patentanspruch 4 ausgestalteten Systems befindlichen Daten.

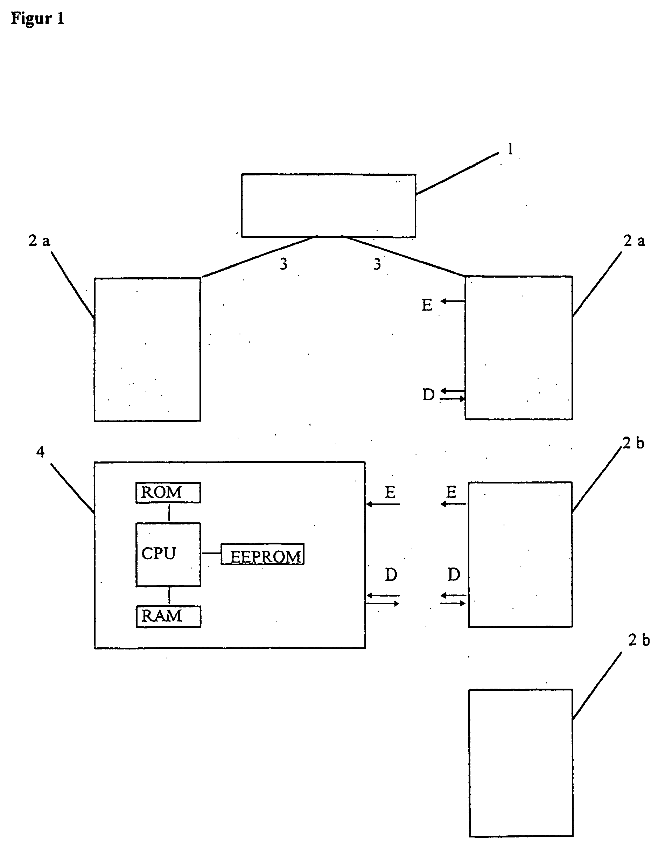

In Fig. 1 ist eine Zentrale 1 dargestellt, welche mit Eingabeeinrichtungen (Terminals) 2a einer ersten Art über Datenleitungen verbunden ist Terminals 2b einer zweiten Art haben keine ständige Verbindung zur Zentrale, sind aber in der Lage, wie die Terminals der ersten Art mit zum System gehörigen Datenträgern 4 zu kommunizieren. Die Datenträger werden hierzu vom jeweiligen Benutzer in eine geeignete Aufnahme eines Terminals gesteckt und dadurch über eine Energieübertragungs-Schnittstelle E mit der Stromversorgung des Terminals und über eine Datenschnittstelle D mit einem im Terminal befindlichen Rechnersystem verbunden. Hierbei kann die Energie- und Datenübertragung in bekannter Weise über elektrische Kontakte, induktiv oder optisch erfolgen. Der Datenträger 4 selbst, in der Regel eine IC-Karte oder Chipkarte, ist mit einem kompletten, einen Prozessor CPU und verschiedene Speicher ROM, RAM, EEPROM enthaltenden Mikrorechnersystem ausgestattet.

Die Datenträger können unterschiedliche, durchaus auch mehrere verschiedene Aufgaben wahrnehmen. Dies kann z.B. eine Ausweisfunktion sein, wo auf dem Datenträger gespeicherte Daten dem Benutzer Zutritt zu einem gesicherten Bereich gewähren oder die Erlaubnis zu einer bestimmten Handlung geben. Bei einer Scheckkarte enthalten die gespeicherten Daten, ggf in Kombination mit einer vom Benutzer einzugebenden Geheimzahl, die Berechtigung, von einem Konto abzubuchen. - In den genannten Fällen wird man zur Datenauswertung wohl ausschließlich Terminals mit ständiger Datenverbindung zur Zentrale verwenden, was die Bereithaltung von zur Sicherung der Daten vor Manipulation oder unerlaubtem Auslesen erforderlichen Schlüsseln an zentraler, geschützter Stelle ermöglicht - .

Datenträger im Chipkartenformat eignen sich jedoch auch für die Funktion als elektronische Geldbörse, die, mit einem Geldbetrag aufgeladen, zur Bezahlung von Waren oder Dienstleistungen benutzt werden kann. Während das Laden oder Wiederaufladen hier an besonderen, mit der Zentrale, z.B. einer Bank verbundenen Terminals vorgenommen wird, kann das Abbuchen von Beträgen auch an Warenautomaten, Kartentelefonen, Fahrkartenoder Parkscheinautomaten erfolgen, die als systemzugehörige Terminals ausgestaltet, jedoch nicht mit der Zentrale verbunden sind .

An solchen Terminals ist die Übertragung eines Schlüssels oder verschlüsselter Daten von oder zur Zentrale nicht möglich und das Terminal muß ohne Unterstützung durch die Zentrale erkennen, ob ein Datenträger zum System gehört, ob ein auf dem Datenträger gespeicherter Betrag für eine vorzunehmende Abbuchung ausreicht und ob eine getätigte Abbuchung auf dem Datenträger korrekt erfolgt ist .

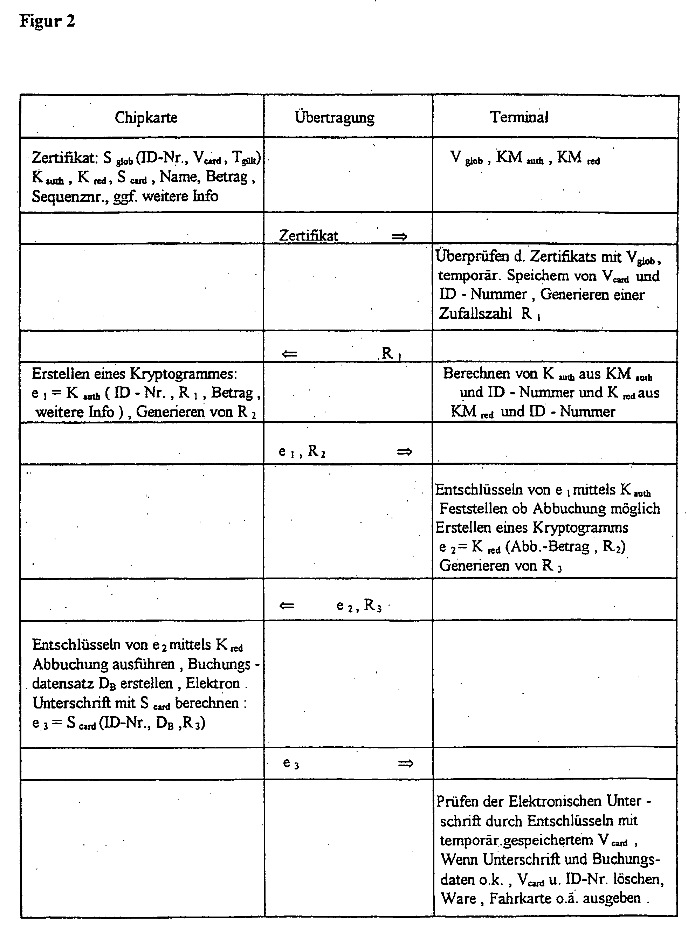

Fig. 2 gibt ein Beispiel für den Ablauf eines Abbuchungsvorgangs auf einer als elektronische Geldbörse ausgestalteten Chipkarte an einem nicht mit der Zentrale verbundenen Terminal wieder.

Hierbei enthält der oberste Absatz des Diagramms die vor der Aktion auf der Chipkarte und im Terminal jeweils gespeicherten, der Sicherung des Vorganges dienenden Daten. In den darunter folgenden Absätzen sind in chronologischer Folge jeweils in der linken Spalte die auf der Chipkarte ablaufenden Vorgänge, in der mittleren Spalte die zwischen Chipkarte und Terminal stattfindenden Übertragungen und in der rechten Spalte die im Terminal ablaufenden Vorgänge wiedergegeben.

Die Chipkarte wurde vor Ausgabe an einen Benutzer von der Zentrale mit einem Zertifikat, einem nach einem asymmetrischen Schlüsselverfahren, z.B. dem bekannten RSA-Algorithmus erstellten, eine elektronische Unterschrift darstellenden Kryptogramm versehen. Das Kryptogramm wurde mit Hilfe der nur in der Zentrale verfügbaren Signierfunktion S_{glob} eines globalen, dem genannten asymmetrischen Schlüsselalgorithmus genügenden Schlüsselpaares S_{glob}, V_{glob} erstellt und enthält neben einer die Chipkarte individuell kennzeichnenden Identifikationsnummer (ID - Nummer) und einer Angabe über die Gültigkeitsdauer T_{gült} die Verifikationsfunktion V_{card} eines kartenindividuellen Schlüsselpaares, das die Chipkarte zur Erstellung von elektronischen Unterschriften nach einem weiteren asymmetrischen Schlüsselverfahren befähigt. Die zugehörige Signierfunktion S_{card} ist gleichfalls auf der Karte gespeichert und verbleibt auf ihr. In einem Speicher der Chipkarte befinden sich außerdem weitere, der Durchführung symmetrischer Schlüsseiverfahren wie z.B. DES (Data Encryption Standard), Triple DES oder IDEA dienende, kartenindividuelle Schlüssel Kₐᵤₜₕ, K_{red}, sowie weitere Informationen, wie z.B. der Name des Benutzers, der gespeicherte Geldbetrag und eine Sequenznummer, die die Zahl der getätigten Abbuchungen wiedergibt .

In allen zum System gehörigen Terminals sind der zur Verifikation der Zertifikate der Systemchipkarten notwendige Schlüssel V_{glob} und zwei übergeordnete Schlüssel KMₐᵤₜₕ und KM_{red} gespeichert. Aus den übergeordneten Schlüsseln können die Terminals durch Verknüpfung dieser Schlüssel mit den Identifikationsnummern der jeweils zu bearbeitenden Karten die auf den Karten gespeicherten, der Ausführung symmetrischer Schlüsselverfahren dienenden Schlüssel Kₐᵤₜₕ und K_{red} nachbilden .

Wird nun die Chipkarte mit einem Terminal in Verbindung gebracht, so erfolgt, sobald die Karte dies - z.B. am Anliegen einer Versorgungsspannung - erkennt, eine Übertragung des Zertifikats an das Terminal. Besitzt dieses den globalen Schlüssel V_{glob}, so kann sein Rechner das Zertifikat verifizieren und erfährt dabei die Identifikationsnummer der Karte, deren Gültigkeit und die Verifikationsfunktion V_{card}. Die Identifikationsnummer und V_{card} werden vom Terminal temporär gespeichert und stehen damit für nachfolgende Kontrollund Rechenvorgänge zur Verfügung.

Im nächsten Schritt löst das Terminal ein sogenanntes challenge and response- Verfahren aus, indem es in bekannter Weise eine Zufallszahl R₁ generiert und an die Karte übermittelt. Der auf der Chipkarte befindliche Rechner erstellt daraufhin ein Kryptogramm e₁, in dem weitere an das Terminal zu übertragende Daten zusammen mit der Zufallszahl R₁, mit Hilfe des nach einem symmetrischen Schlüsselalgorithmus arbeitenden Schlüssels Kₐᵤₜₕ verschlüsselt sind. Insbesondere enthält dieses Kryptogramm den auf der Chipkarte gespeicherten Geldbetrag, damit das Terminal erfährt, bis zu welcher Höhe Geld von der Karte abgebucht werden kann. Das Kryptogramm e₁ wird nun zusammen mit einer auf der Karte generierten zweiten Zufallszahl R₂, die ein challenge and response - Verfahren in Gegenrichtung einleitet, übertragen .

Während auf der Chipkarte das Kryptogramm e₁ erstellt wurde hat das Terminal aus den beiden übergeordneten Schlüsseln KMₐᵤₜₕ und KM_{red} mit Hilfe der Identifikationsnummer der Karte die kartenindividuellen Schlüssel Kₐᵤₜₕ und K_{red} berechnet und ist nun in der Lage, das Kryptogramm e₁ zu entschlüsseln. Nachdem es den von der Eingabe des Benutzers am Terminal abhängigen abzubuchenden Betrag kennt, vergleicht es diesen mit dem auf der Karte gespeicherten Betrag und erstellt, sofern dieser nicht niedriger ist, ein Abbuchungskryptogramm e₂, welches neben dem abzubuchenden Betrag die zweite Zufallszahl R₂ enthält. Dieses Kryptogramm wird mit Hilfe des weiteren, nach einem symmetrischen Schlüsselalgorithmus arbeitenden Schlüssels K_{red} berechnet und zusammen mit einer dritten Zufallszahl R₃ an die Chipkarte übertragen. Es ist hier prinzipiell möglich, ohne großen Verlust an Sicherheit, anstelle des weiteren Schlüssels K _{red} nochmals den Schlüssel Kₐᵤₜₕ zu verwenden und den Schlüssel K_{red} einzusparen.

Im nächsten Schritt erfolgt - nach Entschlüsseln des Kryptogramms e₂ - die eigentliche Abbuchung auf der Chipkarte. Die Chipkarte erstellt hierzu einen Buchungsdatensatz D_{B} mit dem ursprünglich gespeicherten, dem abgebuchten und dem aktuellen Geldbetrag und im System vorgesehenen weiteren Angaben wie z.B. Buchungs-/Sequenznummer, Buchungsdatum, Währung. Die Chipkarte bestätigt diesen Datensatz mit einer elektronischen Unterschrift, indem sie mit Hilfe der Signierfunktion S_{card} des eingangs genannten, weiteren, nach einem asymmetrischen Schlüsselverfahren arbeitenden Schlüsselpaares ein Quittungskryptogramm e₃ erstellt, in welchem neben dem Buchungsdatensatz und der Identifikationsnummer auch die Zufallszahl R₃ verschlüsselt ist. Nachdem das Terminal die zu S_{card} gehörige Verifikationsfunktion V_{card} temporär gespeichert hat, kann es das Kryptogramm e₃ entschlüsseln und somit den Datensatz und die Authentizität der Daten prüfen. Wird kein Fehler gefunden, so werden die temporär gespeicherte Identifikationsnummer und die Verifikationsfunktion V_{card} gelöscht und die Ausgabe der Ware oder Fahrkarte oder die Schaltung einer vom Benutzer gewählten Telefonverbindung veranlaßt.

In ähnlicher Weise kann das Auslesen einer Information aus einem tragbaren Datenträger, z.B. einer als Ausweis dienenden Chipkarte gesichert werden: Hier authentifiziert sich die Chipkarte zunächst gegenüber der Kontrolleinrichtung (Terminal). Dies geschieht mit Hilfe eines symmetrischen Schlüsselverfahrens. Nachfolgend sendet das Terminal einen nach einem symmetrischen Algorithmus kryptogrammgesicherten Auslesebefehl und mit diesem seine Authentikation an die Chipkarte. Diese übergibt die Information mit einer. nach einem asymmetrischen Schlüsselverfahren erstellten digitalen Unterschrift .

Bei besonders hohem Sicherheitsbedürfnis und von der Zentrale abgesetzten, nicht mit dieser verbundenen Terminals kann auch hier ein asymmetrisches, die Übertragung eines Zertifikats ermöglichendes Schlüsselverfahren vorgeschaltet werden. In der Regel wird hier jedoch ein symmetrisches Schlüsselverfahren genügen, da hier die Gefahr der Herstellung von Duplikaten von Chipkarten durch einen Berechtigten kaum gegeben ist und ein Dritter, der sich Zugang zu einem im Terminal gespeicherten Schlüssel verschaffen würde, auch noch in den Besitz einer gültigen Chipkarte gelangen müßte, um die elektronische Unterschrift, die letztlich die mit dem Ausweis verbundene Berechtigung gibt, leisten zu können.

## Patentansprüche

1. System zum gesicherten Lesen und Ändern von Daten auf intelligenten Datenträgern (4), insbesondere IC-Karten, mit Terminals (2a, 2b), die einer übergeordneten Zentrale (1) zugeordnet und mit zur temporären Kommunikation mit den Datenträgern geeigneten Schnittstellen (E, D) ausgestattet sind, wobei auf jedem Datenträger neben der auszulesenden oder zu ändernden Information und einer Identifikationsinformation ein Schlüssel (Kₐᵤₜₕ) gespeichert ist, der auch den Terminals zur Authentikation des jeweiligen Datenträgers nach einem symmetrischen Schlüsselverfahren zur Verfügung steht, **gekennzeichnet durch** folgende Merkmale:
a) ein auf dem Datenträger zur Übergabe an das Terminal gespeichertes Zertifikat, das mit Hilfe einer zur Zertifizierung der im System zu verwendenden Datenträger dienenden globalen Signierfunktion (S_{glob}) aus datenträger-individuellen Daten (_{ID}) einschließlich einer individuellen Verifikationsfunktion (V_{card}) und einer Gültigkeit (T_{gült}) gebildet ist,
b) Mittel zur Verifikation des an das Terminal übergebenen Zertifikats im Terminal mit Hilfe einer im Terminal gespeicherten globalen Verifikationsfunktion (V_{glob}) und zur vorübergehenden Speicherung der datenträger-individuellen Daten (ID) und der individuellen Verifikationsfunktion (V_{card}),
c) Mittel zur Ableitung mindestens eines Schlüssels (Kₐᵤₜₕ; K_{red}) aus den datenträger-individuellen Daten (ID) und aus mindestens einem im Terminal gespeicherten übergeordneten Schlüssel (KMₐᵤₜₕ; KM_{red}),
d) Mittel zum Datenaustausch zwischen dem Datenträger und dem Terminal einschließlich der Übergabe eines Datenänderungsbefehls des Terminals an den Datenträger mit einem Challenge-and-Response-Verfahren unter Verwendung des mindestens einen abgeleiteten Schlüssels (Kₐᵤₜₕ; K_{red}), das gleichzeitig eine Authentikation des Terminals gegenüber dem Datenträger realisiert,
e) Mittel zur Erstellung und Übergabe eines aus der Chipkarte auszulesende Daten dokumentierenden Datensatzes in Form eines mit einer individuellen Signierfunktion (S_{card}) gebildeten Kryptogramms an das Terminal und
f) Mittel zur Überprüfung des Kryptogramms mit Hilfe der individuellen Verifikationsfunktion (V_{card}) im Terminal und zum anschließenden Löschen der vorübergehend gespeicherten datenträger-individuellen Daten (ID, V_{card}) im Terminal.

2. System nach Anspruch 1, **dadurch gekennzeichnet, daß** der in dem symmetrischen Schlüsselverfahren zur Authentikation eines Datenträgers zu benutzende Schlüssel unter Verwendung der datenträger-individuellen Daten, insbesondere einer Identifikationsnummer, aus einem übergeordneten Schlüssel (KMₐᵤₜₕ) abgeleitet ist, daß dieser übergeordnete Schlüssel in allen zum System gehörenden Terminals gespeichert ist, und der zur Authentikation eines Datenträgers gegenüber einem Terminal im Terminal benötigte Schlüssel (Kₐᵤₜₕ) jeweils aus dem gespeicherten, übergeordneten Schlüssel und den vom Datenträger übermittelten datenträger-individuellen Daten berechnet wird.

3. System nach einem der Ansprüche 1 oder 2, **dadurch gekennzeichnet, daß** auf jedem Datenträger und in jedem Terminal ein weiterer, in einem symmetrischen Schlüsselverfahren verwendbarer Schlüssel (K_{red}) zur Verfügung steht, der der Authentikation des Terminals gegenüber einem mit diesem kommunizierenden Datenträger dient.

4. System nach Anspruch 3, **dadurch gekennzeichnet, daß** der weitere Schlüssel (K_{red}) auf dem Datenträger und im Terminal jeweils gespeichert ist oder aus einem gespeicherten übergeordneten Schlüssel (KM_{red}) unter Verwendung der datenträger-individuellen Daten abgeleitet wird.

5. Verfahren zum gesicherten Lesen von Daten auf intelligenten Datenträgern, insbesondere Chipkarten, mit Terminals (2a, 2b), die einer übergeordneten Zentrale (1) zugeordnet und mit zur temporären Kommunikation mit den Datenträgern geeigneten Schnittstellen (E, D) ausgestattet sind, wobei auf jedem Datenträger neben der auszulesenden oder zu ändernden Information und einer Identifikationsinformation ein Schlüssel (Kₐᵤₜₕ) gespeichert ist, der auch den Terminals zur Authentikation des jeweiligen Datenträgers nach einem symmetrischen Schlüsselverfahren zur Verfügung steht, **gekennzeichnet durch** folgende Schritte:
a) Übergabe eines auf dem Datenträger gespeicherten Zertifikats an das Terminal, wobei das Zertifikat mit Hilfe einer zur Zertifizierung der im System zu verwendenden Datenträger dienenden globalen Signierfunktion (S_{glob}) aus datenträger-individuellen Daten (ID) einschließlich einer individuellen Verifikationsfunktion (V_{card}) und einer Gültigkeit gebildet ist,
b) Verifikation des an das Terminal übergebenen Zertifikats im Terminal mit Hilfe einer im Terminal gespeicherten globalen Verifikationsfunktion (V_{glob}) und vorübergehende Speicherung der datenträger-individuellen Daten (I_{D}) und der individuellen Verifikationsfunktion (V_{card}),
c) Ableitung mindestens eines Schlüssels aus den datenträger-individuellen Daten und aus mindestens einem im Terminal gespeicherten übergeordneten Schlüssel,
d) zwischen dem Datenträger und dem Terminal findet ein Datenaustausch einschließlich der Übergabe eines Auslesebefehls des Terminals an den Datenträger mit einem Challenge-and-Response-Verfahren unter Verwendung des mindestens einen abgeleiteten Schlüssels (Kₐᵤₜₕ; K_{red}) statt, das gleichzeitig eine Authentikation des Terminals gegenüber dem Datenträger realisiert,
e) Erstellung und Übergabe eines aus der Chipkarte auszulesende Daten dokumentierenden Datensatzes in Form eines mit einer individuellen Signierfunktion (S_{card}) gebildeten Kryptogramms an das Terminal,
f) Überprüfung des Kryptogramms mit Hilfe der individuellen Verifikationsfunktion (V_{card}) im Terminal und anschließendes Löschen der vorübergehend gespeicherten datenträger-individuellen Daten (ID, V_{card}) im Terminal.

6. Verfahren zum gesicherten Lesen und Ändern von Daten auf intelligenten Datenträgern, insbesondere Chipkarten, mit Terminals (2a, 2b), die einer übergeordneten Zentrale (1) zugeordnet und mit zur temporären Kommunikation mit den Datenträgern geeigneten Schnittstellen (E, D) ausgestattet sind, wobei auf jedem Datenträger neben der auszulesenden oder zu ändernden Information und einer Identifikationsinformation ein Schlüssel (Kₐᵤₜₕ) gespeichert ist, der auch den Terminals zur Authentikation des jeweiligen Datenträgers nach einem symmetrischen Schlüsselverfahren zur Verfügung steht, **gekennzeichnet durch** folgende Schritte:
a) Übergabe eines auf dem Datenträger gespeicherten Zertifikats an das Terminal, wobei das Zertifikat mit Hilfe einer zur Zertifizierung der im System zu verwendenden Datenträger dienenden globalen Signierfunktion (S_{glob}) aus datenträger-individuellen Daten (ID) einschließlich einer individuellen Verifikationsfunktion (V_{card}) und einer Gültigkeit (T_{gült}) gebildet ist,
b) Verifikation des an das Terminal übergebenen Zertifikats im Terminal mit Hilfe einer im Terminal gespeicherten globalen Verifikationsfunktion (V_{glob}) und vorübergehende Speicherung der datenträger-individuellen Daten (ID) und der individuellen Verifikationsfunktion (V_{card}),
c) Ableitung mindestens eines Schlüssels aus den datenträger-individuellen Daten und aus mindestens einem im Terminal gespeicherten übergeordneten Schlüssel,
d) zwischen dem Datenträger und dem Terminal findet ein Datenaustausch einschließlich der Übergabe eines Datenänderungsbefehls des Terminals an den Datenträger mit einem Challenge-and-Response-Verfahren unter Verwendung des mindestens einen abgeleiteten Schlüssels (Kₐᵤₜₕ; K_{red}) statt, das gleichzeitig eine Authentikation des Terminals gegenüber dem Datenträger realisiert,
e) Erstellung und Übergabe eines die Datenänderung dokumentierenden Datensatzes (DB) in Form eines mit einer individuellen Signierfunktion (S_{card}) gebildeten Kryptogramms an das Terminal,
f) Überprüfung des Kryptogramms mit Hilfe der individuellen Verifikationsfunktion (V_{card}) im Terminal und anschließendes Löschen der vorübergehend gespeicherten datenträger-individuellen Daten (ID, V_{card}) im Terminal.

7. Verfahren nach Anspruch 6, **dadurch gekennzeichnet, daß** der Datenträger als elektronische Geldbörse verwendet wird und daß der die Datenänderung dokumentierende Datensatz (DB) den vor der Bearbeitung der Daten (Abbuchung) gültigen Geldbetrag, den abgebuchten Geldbetrag und den nach der Bearbeitung der Daten gültigen Geldbetrag enthält.

8. Verfahren nach einem der Ansprüche 6 oder 7, **dadurch gekennzeichnet, daß** die Anzahl der Datenbearbeitungen auf dem Datenträger fortlaufend gezählt und eine das Zählergebnis wiedergebende Sequenznummer zusammen mit dem die Datenänderung dokumentierenden Datensatz auf das Terminal übertragen wird.

## Claims

1. System for the secure reading and editing of data on intelligent data carriers (4), especially IC cards, with terminals (2a, 2b) associated with a master control centre (1) and equipped with interfaces (E, D) suitable for temporary communication with the data carriers, wherein stored on each data carrier in addition to the information to be read or edited and in addition to an item of identification information is a key (Kₐᵤₜₕ) which is available also to the terminals for the authentication of the data carrier in question using a symmetrical key method, **characterized by** the following features:
a) a certificate stored on the data carrier for transfer to the terminal, wherein said certificate is formed, with the aid of a global signature function (S_{glob}) used for certification of the data carriers to be used in the system, from data-carrier-specific data (ID) including an individual verification function (V_{card}) and a validity (T_{gült});
b) means for verification in the terminal of the certificate transferred to the terminal with the aid of a global verification function (V_{glob}) stored in the terminal and for temporary storage of the data-carrier-specific data (ID) and the individual verification function (V_{card});
c) means for derivation of at least one key (Kₐᵤₜₕ; K_{red}) from the data-carrier-specific data (ID) and from at least one master key (KMₐᵤₜₕ; KM_{red}) stored in the terminal;
d) means for data exchange between the data carrier and the terminal including the transfer of a data editing command from the terminal to the data carrier with a challenge-and-response method using the at least one derived key (Kₐᵤₜₕ; K_{red}), said method simultaneously authenticating the terminal vis-a-vis the data carrier;
e) means for generating and transferring to the terminal a data record, documenting data to be read from the chipcard, in the form of a cryptogram formed with an individual signature function (S_{card}) and
f) means for checking the cryptogram with the aid of the individual verification function (V_{card}) in the terminal and for subsequent deleting of the temporarily stored data-carrier-specific data (ID, V_{card}) in the terminal.

2. System according to claim 1, **characterized in that** the key to be used in the symmetrical key method for the authentication of a data carrier is derived from a master key (KMₐᵤₜₕ) using the data-carrier-specific data, especially an identification number, **in that** said master key is stored in all terminals belonging to the system, and **in that** the key (Kₐᵤₜₕ) required in the terminal for the authentication of a data carrier vis-à-vis a terminal is in each case calculated from the stored master key and from the data-carrier-specific data communicated from the data carrier.

3. System according to any one of claims 1 or 2, **characterized in that** a further key (K_{red}) usable in a symmetrical key method is available on each data carrier and in each terminal, said further key (K_{red}) being used to authenticate the terminal vis-à-vis a therewith communicating data carrier.

4. System according to claim 3, **characterized in that** the further key (K_{red}) is stored in each case on the data carrier and in the terminal or is derived from a stored master key (KM_{red}) using the data-carrier-specific data.

5. Method for the secure reading of data on intelligent data carriers, especially chipcards, with terminals (2a, 2b) associated with a master control centre (1) and equipped with interfaces (E, D) suitable for temporary communication with the data carriers, wherein stored on each data carrier in addition to the information to be read or edited and in addition to an item of identification information is a key (Kₐᵤₜₕ) which is available also to the terminals for the authentication of the data carrier in question using a symmetrical key method, **characterized by** the following steps:
a) transfer of a certificate stored on the data carrier to the terminal, wherein said certificate is formed, with the aid of a global signature function (S_{glob}) used for certification of the data carriers to be used in the system, from data-carrier-specific data (ID) including an individual verification function (V_{card}) and a validity;
b) verification in the terminal of the certificate transferred to the terminal with the aid of a global verification function (V_{glob}) stored in the terminal and temporary storage of the data-carrier-specific data (ID) and the individual verification function (V_{card});
c) derivation of at least one key from the data-carrier-specific data and from at least one master key stored in the terminal;
d) between the data carrier and the terminal there is an exchange of data including the transfer of a data readout command from the terminal to the data carrier with a challenge-and-response method using the at least one derived key (Kₐᵤₜₕ; K_{red}), said method simultaneously authenticating the terminal vis-a-vis the data carrier;
e) generation and transfer to the terminal of a data record, documenting data to be read from the chipcard, in the form of a cryptogram formed with an individual signature function (S_{card}) and
f) checking of the cryptogram with the aid of the individual verification function (V_{card}) in the terminal and subsequent deleting of the temporarily stored data-carrier-specific data (ID, V_{card}) in the terminal.

6. Method for the secure reading and editing of data on intelligent data carriers, especially chipcards, with terminals (2a, 2b) associated with a master control centre (1) and equipped with interfaces (E, D) suitable for temporary communication with the data carriers, wherein stored on each data carrier in addition to the information to be read or edited and in addition to an item of identification information is a key (Kₐᵤₜₕ) which is available also to the terminals for the authentication of the data carrier in question using a symmetrical key process, **characterized by** the following steps:
a) transfer of a certificate stored on the data carrier to the terminal, wherein said certificate is formed, with the aid of a global signature function (S_{glob}) used for certification of the data carriers to be used in the system, from data-carrier-specific data (ID) including an individual verification function (V_{card}) and a validity (T_{gült});
b) verification in the terminal of the certificate transferred to the terminal with the aid of a global verification function (V_{glob}) stored in the terminal and temporary storage of the data-carrier-specific data (ID) and the individual verification function (V_{card});
c) derivation of at least one key from the data-carrier-specific data and from at least one master key stored in the terminal;
d) between the data carrier and the terminal there is an exchange of data including the transfer of a data editing command from the terminal to the data carrier with a challenge-and-response method using the at least one derived key (Kₐᵤₜₕ; K_{red}), said method simultaneously authenticating the terminal vis-a-vis the data carrier;
e) generation and transfer to the terminal of a data record (DB), documenting the data editing, in the form of a cryptogram formed with an individual signature function (S_{card}) and
f) checking of the cryptogram with the aid of the individual verification function (V_{card}) in the terminal and subsequent deleting of the temporarily stored data-carrier-specific data (ID, V_{card}) in the terminal.

7. Method according to claim 6, **characterized in that** the data carrier is used as an electronic purse and **in that** the data record (DB) documenting the data editing contains the amount of money valid prior to the editing of the data (withdrawal), the amount of money withdrawn and the amount of money valid after the editing of the data.

8. Method according to any one of claims 6 or 7, **characterized in that** the number of data edits is serially counted on the data carrier and a sequence number representing the counting result is communicated to the terminal together with the data record documenting the data editing.

## Revendications

1. Système pour la lecture et l'édition sécurisées de données sur des supports de données intelligents (4), notamment des cartes à puce, avec des terminaux (2a, 2b) assignés à un centre maître (1) et équipés d'interfaces (E, D) appropriées pour la communication temporaire avec les supports de données, chaque support de données contenant, outre les informations à extraire ou à éditer et les données d'identification, une clé (Kₐᵤₜₕ) qui peut également être utilisée par les terminaux pour l'authentification du support de données respectif grâce à un procédé de chiffrement symétrique, **caracterisé par** les caractéristiques suivantes:
a) un certificat enregistré sur le support de données pour la remise au terminal, ledit certificat étant généré à partir de données propres à chaque support de données (ID) y compris d'une fonction de vérification (V_{card}) et d'une validité (T_{gült}) à l'aide d'une fonction de signature globale (S_{glob}) destinée à certifier des supports de données utilisés dans le système;
b) un moyen pour la vérification du certificat remis au terminal dans ce dernier par l'intermédiaire d'une fonction de vérification (V_{glob}) enregistrée dans le terminal, pour l'enregistrement temporaire des données propres à chaque support de données (ID) et de la fonction de vérification individuelle (V_{card});
c) un moyen pour la déduction d'au moins une clé (Kₐᵤₜₕ ; K_{red}) des données propres à chaque support de données (ID) et d'une clé maître (KMₐᵤₜₕ ; K_{red}) enregistrée dans le terminal;
d) un moyen pour l'échange de données entre le support de données et le terminal y compris de la remise d'une commande d'édition de données du terminal au support de données à l'aide d'un procédé challenge/response en utilisant au moins l'une des clés déduites (Kₐᵤₜₕ ; K_{red}) qui effectue en même temps l'authentification du terminal vis-à-vis du support de données;
e) un moyen pour l'etablissement et la remise au terminal d'un enregistrement de données documentant des données à extraire de la carte à puce sous forme d'un cryptogramme généré à l'aide d'une fonction de signature individuelle (S_{card});
f) un moyen pour la vérification du cryptogramme à l'aide de la fonction de vérification individuelle (V_{card}) dans le terminal et pour l'effacement súivant des données propres à chaque support de données (ID, V_{card}) dans le terminal.

2. Système selon la revendication 1, **caracterisé en ce que** la clé à utiliser pour l'authentification d'un support de données dans le procédé de chiffrement symétrique en utilisant des données propres à chaque support de données, notamment d'un numéro d'identification, est déduite d'une clé maître (KMₐᵤₜₕ), cette dernière clé est enregistrée dans tous les terminaux appartenant au système et la clé (Kₐᵤₜₕ) requise pour l'authentification d'un support de données vis-à-vis d'un terminal et enregistrée dans le terminal est calculée à partir de la clé maître enregistrée et des données propres à chaque support de données transmises par le support de données.

3. Système selon l'une des revendications 1 ou 2, **caracterisé en ce que** chaque support de données et chaque terminal comporte une autre clé utilisable dans un procédé de chiffrement symétrique (K_{red}) qui sert à authentifier le terminal vis-à-vis d'un support de données communiquant avec celui-ci.

4. Système selon la revendication 3, **caracterisé en ce que** l'autre clé (K_{red}) est enregistrée sur chaque support de données et chaque terminal ou est déduite d'une clé maître (KM_{red}) en utilisant les données propres à chaque support de données.

5. Procédé pour la lecture sécurisée de données sur des supports de données intelligents, notamment des cartes à puce, avec des terminaux (2a, 2b) assignés à un centre maître (1) et équipés d'interfaces (E, D) appropriées pour la communication temporaire avec les supports de données, chaque support de données contenant, outre les informations à extraire ou à éditer et les données d'identification, un clé (Kₐᵤₜₕ) qui peut être utilisée également par les terminaux pour l'authentification du support de données respectif grâce à un procédé de chiffrement symétrique, **caracterisé par** les phases suivantes:
a) remise d'un certificat enregistré sur le support de données au terminal, ledit certificat étant généré à partir de données propres à chaque support de données (ID) y compris d'une fonction de vérification (V_{card}) et d'une validité à l'aide d'une fonction de signature globale (S_{glob}) destinée à certifier des supports de données utilisés dans le système;
b) vérification du certificat remis au terminal dans ce dernier par l'intermédiaire d'une fonction de vérification globale (V_{glob}) enregistrée dans le terminal et enregistrement temporaire des données propres à chaque support de données (ID) et de la fonction de vérification individuelle (V_{card});
c) déduction d'au moins une clé des données propres à chaque support de données et d'une clé maître enregistrée dans le terminal;
d) entre le support de données et le terminal a lieu un échange de données y compris de la remise d'une commande d'extrait envoyée par le terminal au support de donnés à l'aide d'un procédé challenge/response en utilisant au moins l'une des clés déduites (Kₐᵤₜₕ ; K_{red}) qui effectue en même temps l'authentification du terminal vis-à-vis du support de données;
e) établissement et remise au terminal d'un enregistrement de données documentant des données à extraire de la carte à puce sous forme d'un cryptogramme généré à l'aide d'une fonction de signature individuelle (S_{card});
f) vérification du cryptogramme à l'aide de la fonction de vérification individuelle (V_{card}) dans le terminal et ensuite effacement des données propres à chaque support de données (ID, V_{card}) et temporairement enregistrées dans le terminal.

6. Procédé pour la lecture et l'édition sécurisées de données sur des supports de données intelligents (4), notamment des cartes à puce, avec des terminaux (2a, 2b) assignés à un centre maître (1) et équipés d'interfaces (E, D) appropriées pour la communication temporaire avec les supports de données, chaque support de données contenant, outre les informations à extraire ou à éditer et les données d'identification, une clé (Kₐᵤₜₕ) qui peut également être utilisée par les terminaux pour l'authentification du support de données respectif grâce à un procédé de chiffrement symétrique, **caracterisé par** les phases suivantes:
a) remise d'un certificat enregistré sur le support de données au terminal, ledit certificat étant généré à partir de données propres à chaque support de données (ID) y compris d'une fonction de vérification (V_{card}) et d'une validité (T_{gült}) à l'aide d'une fonction de signature globale (S_{glob}) destinée à certifier des supports de données utilisés dans le système;
b) vérification du certificat remis au terminal dans ce dernier par l'intermédiaire d'une fonction de vérification globale (V_{glob}) enregistrée dans le terminal et enregistrement temporaire des données propres à chaque support de données (ID) et de la fonction de vérification individuelle (V_{card});
c) déduction d'au moins une clé des données propres à chaque support de données et d'une clé maître enregistrée dans le terminal;
d) entre le support de données et le terminal a lieu un échange de données y compris de la remise d'une commande d'édition de données envoyée par le terminal au support de données à l'aide d'un procédé challenge/response en utilisant au moins l'une des clés déduites (Kₐᵤₜₕ ; K_{red}) qui effectue en même temps l'authentification du terminal vis-à-vis du support de données;
e) établissement et remise au terminal d'un enregistrement de données documentant des données à extraire de la carte à puce sous forme d'un cryptogramme généré à l'aide d'une fonction de signature individuelle (S_{card});
f) vérification du cryptogramme à l'aide de la fonction de vérification individuelle (V_{card}) dans le terminal et ensuite effacement des données propres à chaque support de données (ID, V_{card}) et temporairement enregistrées dans le terminal.

7. Procédé selon la revendication 6, **caractérisé en ce que** le support de données est utilisé comme bourse électronique et l'enregistrement de données (DB) documentant l'édition de données contient le montant d'argent valable avant le traitement des données (débit), le montant d'argent débité et le montant d'argent valable après le traitement des données.

8. Procédé selon l'une des revendications 6 ou 7, **caractérisé en ce que** le nombre des traitements des données sur le support de données est compté de façon continue et un numéro de séquence reproduisant le résultat de comptage avec l'enregistrement de données documentant l'édition des données est transmis sur le terminal.
